**Europäisches Patentamt**

**European Patent Office**

**Office européen des brevets**

(19)

(11) Numéro de publication : **0 325 549 B1**

(12) **FASCICULE DE BREVET EUROPEEN**

(45) Date de publication du fascicule du brevet :
**11.11.92 Bulletin 92/46**

(51) Int. Cl.⁵ : **B26D 5/34,** B65H 35/10,
G06K 13/04, G06K 13/20

(21) Numéro de dépôt : **89440004.3**

(22) Date de dépôt : **19.01.89**

(54) **Périphérique d'ordinateur pour le traitement de documents informatiques.**

(30) Priorité : **19.01.88 FR 8800759**

(43) Date de publication de la demande :
**26.07.89 Bulletin 89/30**

(45) Mention de la délivrance du brevet :
**11.11.92 Bulletin 92/46**

(84) Etats contractants désignés :
**AT BE CH DE ES GB GR IT LI LU NL SE**

(56) Documents cités :
**EP-A- 0 210 117**
**CH-A- 447 584**
**FR-A- 1 106 023**

(56) Documents cités :
**FR-A- 2 531 685**
**FR-A- 2 587 820**
**US-A- 3 075 493**
**US-A- 3 658 220**

(73) Titulaire : **Remy, Hubert**
**"Les Sorbiers"**
**F-88700 Rambervillers (FR)**

(72) Inventeur : **Remy, Hubert**
**"Les Sorbiers"**
**F-88700 Rambervillers (FR)**

(74) Mandataire : **Poupon, Michel**
**B.P. 421 3, rue Ferdinand Brunot**
**F-88011 Epinal Cédex (FR)**

## Description

La présente invention a pour objet un périphérique d'ordinateur pour le traitement de documents informatiques.

On sait que les ordinateurs sont actuellement fréquemment reliés à des imprimantes, auxquelles ils fournissent des données à imprimer sur un listing. Or ces données pouvant être de nature et de destinataires variables, il est le plus souvent nécessaire d'opérer après coup le découpage du listing sortant de l'imprimante afin d'en séparer les différentes feuilles imprimées et de les trier.

Afin de faciliter ces opérations, le listing comporte le plus souvent une feuille centrale bordée de deux bandes de rive qui peuvent être séparées de ladite feuille centrale par arrachage le long d'une ligne pointillée préexistante, et des perforations transversales aidant au pliage et à la séparation des documents entre eux.

Par ailleurs, la demande de brevet européen publiée 0210117 décrit un périphérique de sortie d'ordinateur permettant un tri rapide et sûr des documents sortant de l'imprimante, grâce à la mise en oeuvre d'une cellule de lecture optique disposée entre la sortie de l'imprimante et l'entrée du dispositif d'émargeage, cette cellule de lecture optique ayant pour fonction de capter des ordres imprimés sur l'une des bandes de rive de la bande de papier continu qui alimente l'imprimante et de les transmettre, au moyen d'une interface électronique, aux organes de commande des éléments de tri qui suivent le dispositif émargeur, ainsi qu'à une station de retournement et/ou d'aiguillage des feuilles imprimées obtenues après découpe transversale de la bande de papier continu au moyen d'un organe de coupe transversale incorporé au dispositif émargeur.

Ce dispositif, s'il représente un progrès notable par rapport à ceux existant à ce jour, présente toutefois l'inconvénient de ne pouvoir être mis en oeuvre que pour des bandes de papier continu, qui ne peuvent en outre être découpées transversalement que d'une manière régulière et uniforme, après préréglage du moyen de coupe transversale incorporé au dispositif d'émargeage. Par ailleurs, il ne peut être utilisé pour des bandes de papier préalablement découpées sur toute leur largeur, à l'exception des bandes de rive, en raison des problèmes posés par l'accrochage fréquent, dans l'imprimante, de ce type de bandes de papier.

La présente invention a pour but de remédier à ces inconvénients en proposant un périphérique d'ordinateur qui permette de traite soit des bandes de papier continu soit des bandes de papier partiellement prédécoupées transversalement, et qui permette en outre, dans le cas d'une bande de papier continu, une découpe transversale modulable de la bande de papier.

La présente invention a ainsi pour objet un périphérique d'ordinateur pour le traitement de documents informatiques comportant une imprimante, une cellule de lecture optique de symboles imprimés sur l'une des bandes de rive, disposée entre la sortie de l'imprimante et un dispositif émargeur coupant les bandes de rive de la bande de papier sortant de l'imprimante, ladite cellule de lecture optique commandant, par l'intermédiaire d'une interface électronique, l'aiguillage des feuilles imprimées obtenues par découpe transversale de la bande de papier, ce périphérique d'ordinateur se caractérisant essentiellement en ce qu'il comporte en outre une table de transfert disposée à la sortie du dispositif émargeur et suivie d'une station d'aiguillage des feuilles, cette table de transfert étant munie de moyens pour acheminer des feuilles de papier imprimées de différentes longueurs, et elle est associée à une deuxième cellule de lecture optique disposée également à la sortie de l'imprimante, en regard d'une piste de symboles imprimés portés par l'une des bandes de rive et destinés à commander, via la cellule de lecture optique associée à une interface électronique, un organe de coupe transversale disposé entre le dispositif émargeur et la table de transfert et permettant une découpe transversale modulable de la bande de papier continu sortant de l'imprimante ;

Selon un mode de réalisation préféré du dispositif selon l'invention, approprié au traitement de bandes de papier continu, la table de transfert disposée à la sortie du dispositif émargeur est précédée d'un organe de coupe transversale actionné par une interface électronique reliée en entrée à une deuxième cellule de lecture optique disposée en regard d'une piste de symboles imprimées sur l'une des bandes de rive et destinés à commander l'organe de coupe en fonction de la longueur choisie pour chaque feuille.

Dans ce cas, la table de transfert est avantageusement munie, approximativement en son milieu, d'un jeu de galets d'entraînement venant compléter les deux jeux de galets d'entraînement normalement disposées à son entrée et à sa sortie, ce afin de permettre l'acheminement des feuilles de moindre longueur.

L'organe de coupe transversale est avantageusement constituée d'un couteau coopérant avec un contre-couteau.

Ce premier mode de réalisation du dispositif selon l'invention permet, ainsi qu'il a déjà été dit, un découpage modulable particulièrement avantageux de la bande de papier continu sortant de l'imprimante.

La présente invention va être maintenant décrite plus en détail en référence au dessin annexé qui en représente les deux modes de réalisation, étant bien entendu que cette description ne présente aucun caractère limitatif vis-à-vis de l'invention.

Dans le dessin annexé :

- la figure 1 représente une vue schématique en coupe d'un premier mode de réalisation du périphérique d'ordinateur selon l'invention, approprié au traitement d'une bande de papier en bobine.

-la figure 2 représente une vue schématique en coupe d'un second mode de réalisation d'un périphérique d'ordinateur, approprié au traitement d'une bande de papier présentant des découpes transversales interrompues par quelques points d'attache.

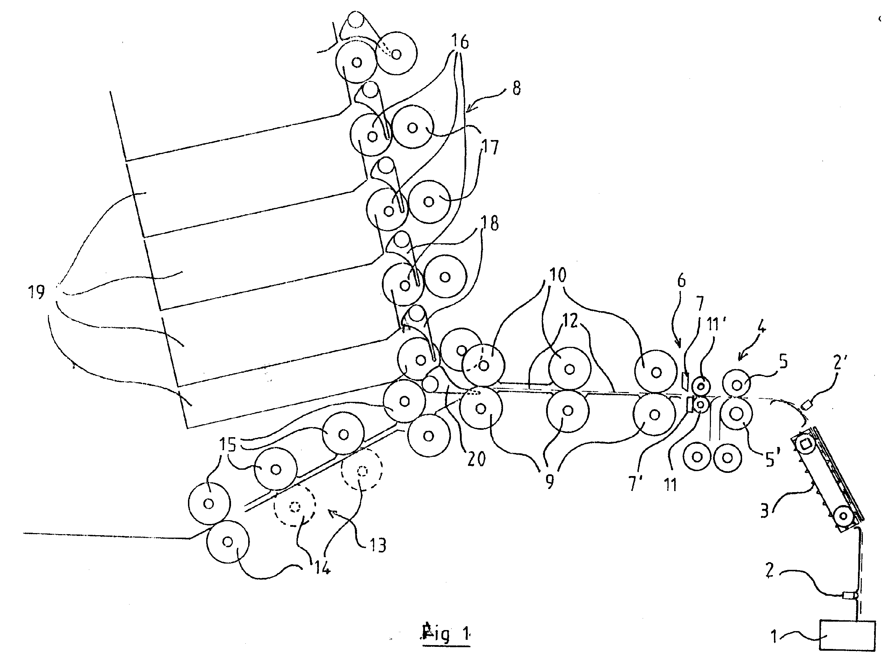

Si l'on se réfère d'abord à la figure 1, sur laquelle le trajet de la bande de papier et des feuilles imprimées est représenté en pointillés, on voit l'imprimante 1 suivie d'un entraînement à picots 3 qui débouche sur un dispositif émargeur 4 constitué de couteaux rotatifs 5 et de contre-couteaux 5' entraînés par un moteur non représenté.

Le dispositif émargeur 4 est suivi d'un jeu de galets d'entraînement 11 mus par moteur et coopérant avec des galets de guidage 11' libres en rotation, suivis d'un organe de coupe transversale 6 constitué d'un couteau 7 et d'un contre-couteau 7'. L'organe de coupe transversale 6 est relié à la sortie d'une interface électronique, non représentée, reliée en entrée à une cellule de lecture optique 2 positionnée à la sortie de l'imprimante 1, en regard d'une piste de la bande de rive qui porte les ordres de coupe codés imprimés.

L'organe de coupe transversale 6 est suivi d'une table de transfert 12 aux deux extrémités et au milieu de laquelle se trouvent disposés trois jeux de galets d'entraînement 9 mus par moteur coopérant avec des galets de guidage 10. La présence du jeu de galets médian se trouve justifiée par les différences de longueurs que les feuilles imprimées peuvent présenter après leur découpe transversale, des feuilles de petite longueur nécessitant la présence d'un jeu de galets à une courte distance de jeu de galets d'entrée de la table de transfert 12.

A la sortie de la table de transfert les feuilles imprimées sont aiguillées par un guide 20 soit vers une station de tri 8 soit vers une station de retournement, non représentée, située en bout d'un chemin 13 jalonné de galets d'entraînement 14 coopérant avec des galets de guidage 15.

La station de tri 8 est constituée d'un ensemble de casiers 19 superposés devant l'entrée desquels se trouvent disposés des guides 18 permettant d'aiguiller les feuilles vers l'un ou l'autre des casiers 19, les guides 18 étant par ailleurs disposés entre des galets d'entraînement 16 coopérant avec des galets de guidage 17.

La guide 20 situé à la sortie de la table de transfert 12 ainsi que les différents guides 18 de la station de tri sont asservis à une interface électronique, non représentée, qui est connectée en entrée à une cellule de lecture optique 2' disposée entre l'entraînement à picots 3 et le dispositif émargeur 4, en regard d'une piste de la bande de rive de la bande de papier continu portant les ordres codés imprimés relatifs à l'aiguillage et au tri des feuilles imprimées.

En bout de chemin 13 les feuilles acheminées vers la station de retournement non représentée peuvent faire l'objet des traitements habituels, à savoir pliage et mise sous enveloppe.

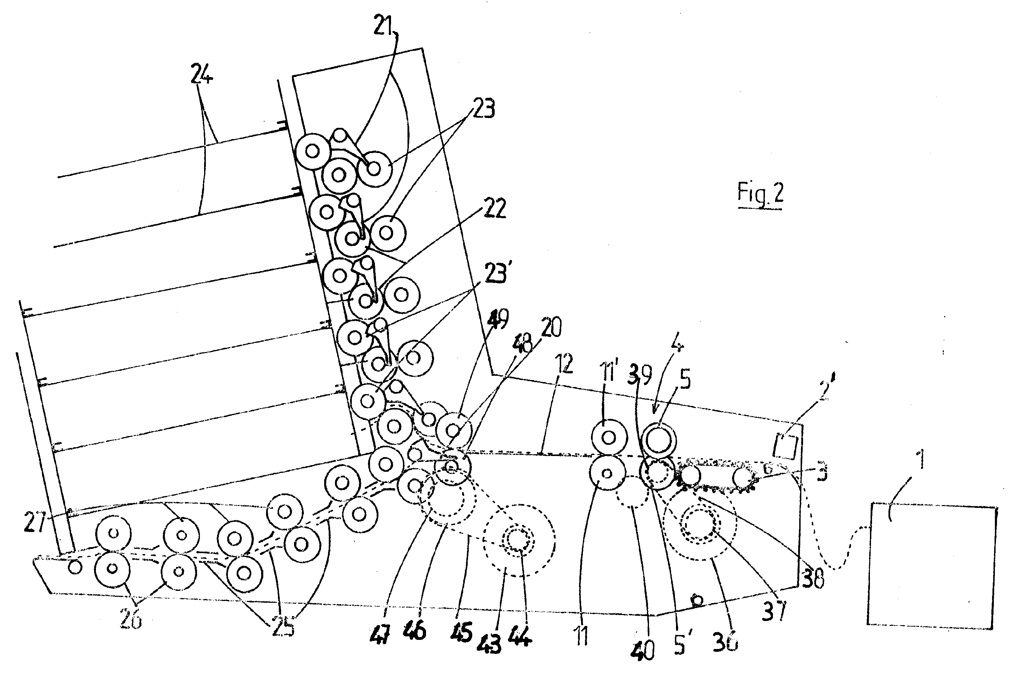

Si on se réfère maintenant à la figure 2, sur laquelle le trajet de la bande de papier et des feuilles imprimées est également représenté en pointillés, on voit l'imprimante 1 suivie d'une cellule de lecture optique 2' et d'un entraînement à picots 3 qui débouche sur le dispositif émargeur 4 constitué de couteaux rotatifs 5 et de contre-couteaux 5' entraînés par un moteur 36 au moyen d'une courroie 38 reliant une poulie d'entraînement 37 à une poulie réceptrice 39 solidaire du contre-couteau 5.

Le dispositif émargeur est suivi d'une table de transfert 12 précédée d'un jeu de galets d'entrée formé de galets d'entraînement 11 et de galets du guidage 11' libres en rotation, les galets d'entraînement 11 étant entraînés par un pignon denté 40 venant en prise d'une part avec un pignon denté, non représenté, solidaire de galets 11 et d'autre part avec un pignon denté, non représenté, solidaire du contre-couteau 5, l'ensemble étant entraîné par le moteur 6.

A l'extrémité de sortie de la table de transfert 12 se trouve disposé un jeu de galets d'entraînement 18 entraîné par un moteur 13 un moyen d'une courroie 45 reliant une poulie d'entraînement 44 solidaire du moteur 43 à une poulie réceptrice 46 solidaire d'un pignon denté 47 venant en prise avec un pignon denté, non représenté, solidaire des galets 48, lesquels coopèrent avec des galets de guidage 49 libres en rotation.

A l'entrée de la table de transfert 12, le papier imprimé se présente sous forme d'une bande de papier dépourvue des bandes de rives. Entre les galets d'entrée 11 et 11' et les galets de sortie 48 une tension s'exerce sur la bande de papier, du fait de la vitesse de rotation accélérée des galets de sortie 48, provoquant la rupture des points d'attache de la bande de papier, qui sort de la table de transfert sous forme de feuilles séparées.

La table de transfert 12 est suivie d'un guide 20 aiguillant les feuilles imprimées soit vers une station de tri, soit vers une station de retournement non représentée, située en bout d'un chemin formé d'une succession de galets d'entraînement 26 coopérant avec des galets de guidage 27 et jalonné de déflecteurs 25.

La station de tri est constituée d'un ensemble de galets d'entraînement 22 coopérant avec des galets de guidage 23 et 23' entre lesquels sont disposés des guides 21 dont la position abaissée ou relevée, commandée par les ordres imprimés sur une bande de rive de la bande de papier et lus à la sortie de l'imprimante par la cellule de lecture optique 2', détermine l'aiguillage des feuilles dans les différents casiers 24.

Les feuilles aiguillées vers la station de retournement non représentée peuvent être ensuite acheminées vers un poste de façonnage permettant, entre autres opérations possibles, leur pliage et leur mise sous enveloppe.

Il va de soi que la présente invention ne saurait être limitée aux dispositifs qui viennent d'être décrits. En particulier, dans le mode de réalisation représenté à la figure 1, les deux cellules optiques 2 et 2′ peuvent être réunies en une cellule optique double lisant des ordres imprimés sur deux pistes parallèles de la même bande de rive de la bande de papier sortant de l'imprimante 1.

## Revendications

1. Périphérique d'ordinateur pour le traitement de documents informatiques, du type comportant une imprimante (1) alimentée en papier mû par un entraînement à picots (3), un dispositif émargeur (4) coupant les bandes de rive du papier, une cellule de lecture optique (2) de symboles imprimés sur l'une des bandes de rive, disposée entre la sortie de l'imprimante (1) et le dispositif émargeur (4) et commandant, par l'intermédiaire d'une interface électronique, l'aiguillage des feuilles imprimées obtenues par découpe transversale de la bande de papier, caractérisé en ce qu'il comporte en outre une table de transfert (12) disposée à la sortie du dispositif émargeur (4), cette table de transfert (12) étant munie de moyens pour acheminer des feuilles de papier imprimées de différentes longueurs, et elle est associée à une deuxième cellule de lecture optique (2′) disposée également à la sortie de l'imprimante (1), en regard d'une piste d'une des bandes de rive portant des symboles imprimés destinés à commander, via la cellule de lecture optique (2′) associée à une interface électronique, un organe de coupe transversale (6) disposé entre le dispositif émargeur (4) et la table de transfert (12) et permettant une découpe transversale modulable de la bande de papier continu sortant de l'imprimante (1) ;

2. Périphérique d'ordinateur selon la revendication 1, permettant une découpe modulable d'une bande de papier en bobine, caractérisé en ce que la table de transfert (12) comporte trois jeux de galets d'entraînement (9) disposés à ses deux extrémités et approximativement en son milieu, de manière à permettre l'acheminement de feuilles de longueur différentes, la découpe transversale de la bande de papier étant réalisée au moyen d'un organe de coupe (6) commandé, via une interface électronique, par la cellule de lecture optique (2′) disposée en regard d'une piste de symboles imprimée sur une bande de rive de la bande de papier continu sortant de l'imprimante (1) et portant des ordres de coupe modulés en fonction de la longueur choisie pour chaque feuille imprimée.

3. Périphérique d'ordinateur selon la revendication 2, caractérisé en ce que l'organe de coupe transversale est un couteau (7) associé à un contre-couteau (7′).

## Patentansprüche

1. Peripheriegerät für einen Rechner zur Behandlung von Informationsdokumenten, welches einen mittels eines Stachelförderers (3) mit Papier beschickten Drucker (1), eine Schneidvorrichtung (4) zum Abschneiden der Randstreifen des Papiers und eine zwischen dem Ausgang des Druckers (1) und der Schneidvorrichtung (4) angeordnete optische Lesezelle (2) für auf einem der Randstreifen gedruckte Symbole hat, welche über ein zwischengeschaltetes elektronisches Interface die Ableitung der bedruckten Blätter steuert, die durch Schneiden des Papierbandes in Querrichtung gebildet sind, **dadurch gekennzeichnet,** daß es desweiteren am Ausgang der Schneidvorrichtung (4) einen Transfertisch (12) aufweist, wobei dieser Transfertisch (12) mit Mittel zum Mitnehmen von bedruckten Papierblättern unterschiedlicher Länge versehen und ihr eine zweite, ebenfalls am Ausgang des Druckers (1) gegenüber einer Bahn eines der Randbänder angeordnete, optische Lesezelle (2′) zugeordnet ist, wobei der Randstreifen Drucksymbole aufweist, die zum Steuern eines zwischen der Schneidvorrichtung (4) und dem Transfertisch (12) angeordneten Querschneideorgans (6) durch die mit einem elektronischen Interface verbundene, optische Lesezelle (2′) bestimmt sind, welches ein längenveränderliches Abschneiden des kontinuierlich den Drucker (1) verlassenden Papierbandes in Querrichtung ermöglicht.

2. Peripheriegerät für einen Rechner nach Anspruch 1, welches ein längenveränderliches Abschneiden eines Bandes von einer Rolle ermöglicht, **dadurch gekennzeichnet,** daß der Transfertisch (12) drei Sätze von Mitnehmerwalzen (9) aufweist, welche an seinen beiden Enden und in etwa auf seiner Mitte angeordnet sind, so daß Blätter unterschiedlicher Länge mitgenommen werden können, wobei der Schnitt des Papierbandes in Querrichtung durch ein Schneidorgan (6) erfolgt, welches über ein elektronisches Interface durch eine optische Lesezelle (2′) gesteuert und gegenüber einer Bahn von Drucksymbolen auf dem Randstreifen der Papierbahn angeordnet ist, welche den Drucker (1) kontinuierlich verläßt und modulierte Schneidbefehle in Abhängigkeit von der gewählten Länge für jedes gedruckte Blatt enthält.

3. Peripheriegerät für einen Rechner nach Anspruch 2, **dadurch gekennzeichnet**, daß das Querschneidorgan ein einem Gegenmesser (7') zugeordnetes Messer (7) ist.

**Claims**

1. Computer peripheral unit for handling information documents, of the type comprising a printer (1) provided with paper driven by a cog drive (3), a trimming device (4) cutting the edge strips of the paper, an optical reading cell (2) for reading symbols printed on one of the edge strips, being disposed between the outlet of the printer (1) and the trimming device (4) and controlling, through the intermediary of an electronic interface, the sorting of the printed sheets obtained by transversely cutting the strip of paper, characterised in that it additionally comprises a transfer table (12) disposed at the outlet of the trimming device (4), this transfer table (12) being provided with means for conveying printed sheets of paper of different lengths, and it is associated with a second optical reading cell (2'), also disposed at the outlet of the printer (1), facing a track of one of the edge strips bearing printed symbols intended to control, via the optical reading cell (2') associated with an electronic interface, a transverse cutting member (6) disposed between the trimming device (4) and the transfer table (12) and permitting a modulatable transverse cutting of the continuous strip of paper emerging from the printer (1).

2. Computer peripheral unit according to claim 1, permitting a modulatable cutting of a strip of paper on a roll, characterised in that the transfer table (12) comprises three sets of drive rollers (9) disposed at its two ends and approximately at its centre, so as to permit the conveyance of sheets of different lengths, the transverse cutting of the strip of paper being achieved by means of a cutting member (6) controlled, via an electronic interface, by the optical reading cell (2') facing a row of symbols printed on one edge strip of the strip of continuous paper emerging from the printer (1) and bearing cutting instructions modulated in dependence on the length selected for each printed sheet.

3. Computer peripheral unit according to claim 2, characterised in that the transverse cutting member is a cutter (7) associated with a counter-cutter (7').

Fig 1

Fig. 2

EP 0 325 549 B1